# FASCICULE DE BREVET EUROPEEN

(11) **EP 1 379 586 B1**
(45) Date de publication et mention de la délivrance du brevet: **28.02.2007**
(21) Numéro de dépôt: 02732466.4
(22) Date de dépôt: 08.03.2002
(51) Int. Cl.: C08K 5/103, C08L 21/00, B60C 1/00

(54) **COMPOSITION DE CAOUTCHOUC POUR BANDE DE ROULEMENT DE PNEUMATIQUE**
KAUTSCHUKZUSAMMENSETZUNG FÜR REIFENLAUFFLÄCHE
RUBBER COMPOSITION FOR TYRE RUNNING TREAD

(30) Priorité: 12.03.2001 FR 0103356
(43) Date de publication de la demande: 14.01.2004
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: VASSEUR, Didier, F-63100 Clermont-Ferrand (FR); LABAUZE, Gérard, F-63100 Clermont-Ferrand (FR)
(74) Mandataire: Hiebel, Robert
(86) Numéro de dépôt international: PCT/EP2002/002558
(87) Numéro de publication internationale: WO 2002/088238

(56) Documents cités:
- EP-A- 0 524 164
- EP-A- 0 561 761
- EP-A- 0 677 548
- EP-A- 0 921 150

## Description

La présente invention concerne une composition de caoutchouc réticulable ou réticulée qui est utilisable pour constituer une bande de roulement d'une enveloppe de pneumatique, et une enveloppe de pneumatique incorporant cette bande de roulement. L'invention s'applique notamment à des enveloppes de pneumatique de type tourisme.

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que des bandes de roulement, et afin d'obtenir des pneumatiques possédant une résistance au roulement réduite.

Parmi les nombreuses solutions proposées pour réduire l'hystérèse de compositions de bande de roulement et, par conséquent, la résistance au roulement de pneumatiques comportant de telles compositions, on peut par exemple citer les compositions décrites dans les documents de brevet US-A-4 550 142, US-A-5 001 196, EP-A-299 074 ou EP-A-447 066.

En plus de cette réduction de la résistance au roulement, il est également souhaitable d'améliorer l'adhérence sur sols secs ou humides de véhicules équipés de ces pneumatiques.

Des solutions proposées dans le passé pour améliorer certaines performances d'adhérence, telles que l'adhérence sur sols enneigés ou glacés, ont consisté à remplacer tout ou partie des huiles aromatiques, qui sont usuellement utilisées dans les bandes de roulement de pneumatique de type tourisme, par d'autres plastifiants spécifiques.

En effet, un inconvénient majeur de ces huiles aromatiques réside dans leur exsudation de la bande de roulement par compression lors d'un roulage prolongé, ainsi que dans leur migration vers des mélanges adjacents à ladite bande de roulement en raison de leur volatilité. Cette perte d'huile aromatique pour la bande de roulement se traduit par un tassement (c'est-à-dire une réduction de la hauteur moyenne des sculptures) et un durcissement de celle-ci et, par conséquent, par une déformation permanente de la bande de roulement qui pénalise notamment la performance d'adhérence.

Et cet inconvénient est d'autant plus marqué que la bande de roulement comprend une quantité plus élevée de charge renforçante, du fait que la quantité d'huile aromatique requise à titre de plastifiant est également plus élevée.

Parmi les solutions proposées pour pallier cet inconvénient, on peut notamment citer des plastifiants comprenant du trioctylphosphate ou un alkyloléate, en plus d'une huile aromatique.

Le document de brevet américain US-A-5 852 089 présente l'utilisation, dans une composition de bande de roulement majoritairement à base de caoutchouc naturel et chargée au noir de carbone, d'un plastifiant obtenu par estérification de la diglycérine ou d'un adduit d'oxyde d'alcène d'un alcool polyhydrique avec un acide gras insaturé, pour améliorer l'adhérence du pneumatique correspondant, en particulier sur un sol glacé.

Plus précisément, ce document divulgue, dans ses exemples de réalisation (pce : parties en poids pour cent parties d'élastomère(s)), un plastifiant de type ester qui est présent selon une quantité de 7 pce (en association avec 10 pce d'huile aromatique) ou de 30 pce (sans huile aromatique) dans la composition de bande de roulement, et qui est constitué du produit de la réaction :
- de la diglycérine et de l'acide oléique, ou
- de la diglycérine et de l'acide linoléique, ou
- d'un adduit d'oxyde de propylène de la glycérine et de l'acide oléique, ou
- d'un adduit d'oxyde de propylène du triméthylolpropane et de l'acide oléique, ou
- d'un adduit d'oxyde de propylène du triméthylolpropane et d'acide linoléique, ou
- d'un adduit d'oxyde de propylène du pentaerythritol et d'acide oléique.

Le document de brevet japonais JP-A-01 215838 divulgue l'utilisation, dans une composition de bande de roulement chargée au noir de carbone, d'un plastifiant comprenant :
- une huile aromatique selon une quantité de 25 pce,
- une huile de bois selon une quantité de 15 pce, laquelle est à base de glycérides d'acide éléostéarique et d'acide oléique, et
- une résine de type rosine, selon une quantité de 15 pce.

Le document de brevet américain US-A-5 252 649 divulgue l'utilisation, dans des compositions de bande de roulement chargées au noir de carbone, d'autres plastifiants spécifiques pour améliorer l'adhérence des pneumatiques correspondants sur des sols glacés ou enneigés. Les plastifiants testés dans les exemples de réalisation décrits comprennent :
- des huiles plastifiantes extraites du pétrole (de type aromatique et optionnellement naphténique), selon une quantité totale allant de 20 à 50 pce, et
- des composés plastifiants non extraits du pétrole comprenant, selon une quantité allant de 5 à 15 pce, une huile de colza ou, selon une quantité de 5 pce, une huile de tournesol, et comprenant optionnellement du trioléate de glycérol selon une quantité de 5 pce.

De plus, ces composés non extraits du pétrole sont présents dans le plastifiant selon une fraction massique qui est inférieure à 43 %.

Le document de brevet européen EP-A-561 761 divulgue l'utilisation, dans des compositions de bande de roulement chargées au noir de carbone, de plastifiants également destinés à améliorer l'adhérence des pneumatiques correspondants sur des sols glacés ou enneigés. Les plastifiants testés dans les exemples de réalisation décrits comprennent :
- des huiles plastifiantes extraites du pétrole (de type aromatique et optionnellement naphténique), selon une quantité totale allant jusqu'à 50 pce, ou
- un composé plastifiant non extrait du pétrole comprenant, selon une quantité allant de 25 à 30 pce, une huile de colza spécifique.

Cette huile de colza est telle qu'elle dérive d'acides gras dans lesquels l'acide oléique est présent selon une fraction massique de l'ordre de 53 %.

Le document de brevet européen EP-A-677 548 divulgue l'utilisation, dans des compositions de bande de roulement comprenant à titre de charge renforçante une silice spécifique (silice constituée de granulés qui est commercialisée par la société Dégussa sous la dénomination « VN3 »), et optionnellement du noir de carbone, de plastifiants également destinés à améliorer l'adhérence des pneumatiques correspondants sur des sols glacés ou enneigés. Les plastifiants testés dans les exemples de réalisation décrits comprennent :
- des huiles plastifiantes extraites du pétrole selon une quantité totale allant de 22,5 à 36 pce, et
- un composé plastifiant non extrait du pétrole comprenant, selon une quantité allant de 5 à 7,5 pce, une huile de colza telle que celle utilisée au document précédent ou, selon une quantité de 5 pce, du triéthylèneglycol dihexanoate.

On notera que les compositions de bande de roulement qui sont présentées dans chacun de ces trois derniers documents sont spécifiquement conçues pour présenter, à l'état réticulé, des températures de transition vitreuse (Tg) qui sont relativement basses (en raison des huiles végétales ou des triesters utilisés, notamment), ces basses températures étant requises pour l'obtention de performances d'adhérence satisfaisantes sur neige ou sur glace.

Le but de la présente invention est de proposer une nouvelle composition selon la revendication 1 qui permet d'obtenir une bande de roulement de pneumatique dans laquelle l'exsudation en roulage du plastifiant par compression et sa migration vers des mélanges adjacents sont minimisées, ce qui se traduit par un tassement et un durcissement également minimisés pour la bande de roulement et, par conséquent, par une conservation dans le temps des performances d'adhérence précitées.

On notera que ledit ou lesdits composés non extraits du pétrole que comprend le plastifiant selon l'invention sont tels qu'ils demeurent pratiquement intégralement dans la bande de roulement du pneumatique en roulage, même lorsque ces composés sont présents dans ladite composition selon des quantités élevées en raison d'une quantité de charge renforçante également élevée dans ladite composition.

On notera également que la présence dans la composition selon l'invention de ces composés non extraits du pétrole, venant en remplacement partiel ou total des huiles plastifiantes usuelles extraites du pétrole, permet de conférer une endurance améliorée à une enveloppe de pneumatique incorporant ces composés non extraits du pétrole dans sa bande de roulement, du fait que leur présence dans les proportions précitées permet de minimiser la migration desdites huiles extraites du pétrole dans les mélanges adjacents de l'enveloppe et, par conséquent, de minimiser l'altération des propriétés desdits mélanges, telles que leur rigidité et leur résistance à la fissuration, ce qui permet d'améliorer la résistance de l'enveloppe à la séparation des nappes sommet de triangulation qu'elle comporte dans son armature de sommet (cette résistance à la séparation des nappes est parfois appelée résistance au « clivage » par l'homme du métier).

□ Par élastomère diénique, on entend de manière connue un élastomère issu au moins en partie (homopolymère ou copolymère) de monomères diènes (monomères porteurs de deux doubles liaisons carbone-carbone, conjuguées ou non).

Le ou les élastomères diéniques de la composition selon l'invention sont dits « fortement insaturés», c'est-à-dire qu'ils sont issus de monomères diènes conjugués avec un taux molaire de motifs issus de diènes conjugués qui est supérieur à 50 %.

Plus précisément, la composition selon l'invention comprend, à titre d'élastomère(s) diénique(s) :
- selon une quantité supérieure à 50 pce et allant jusqu'à 100 pce, un ou plusieurs élastomères diéniques, ou élastomères majoritaires, présentant chacun une température de transition vitreuse comprise entre -65° C et -10° C, et
- selon une quantité inférieure à 50 pce et allant jusqu'à 0 pce, un ou plusieurs élastomères diéniques, ou élastomères minoritaires, présentant chacun une température de transition vitreuse comprise entre -110° C et -80° C.

Selon un exemple de réalisation de l'invention :
- ledit ou lesdits élastomères diéniques majoritaires appartiennent au groupe constitué par des copolymères de styrène et de butadiène préparés en solution (ou S-SBR), des copolymères de styrène et de butadiène préparés en émulsion (ou E-SBR), des polyisoprènes naturels, des polyisoprènes de synthèse présentant un taux d'enchaînements cis-1,4 supérieur à 95 % et par un mélange de ces élastomères, et
- ledit ou lesdits élastomères diéniques minoritaires présentent, à titre préférentiel, une température de transition vitreuse allant de -105° C à -90° C, et ils comprennent des unités butadiène selon un taux égal ou supérieur à 70 %. A titre encore plus préférentiel, ledit ou l'un au moins desdits élastomères minoritaires est constitué d'un polybutadiène présentant un taux d'enchaînements cis-1,4 supérieur à 90 %.

Selon un mode préférentiel de réalisation de l'invention, lesdits copolymères de styrène et de butadiène préparés en solution présentent une température de transition vitreuse allant de -50° C à -15° C et un taux d'enchaînements trans-1,4 butadiène qui est supérieur à 50 %, et lesdits copolymères de styrène et de butadiène préparés en émulsion présentent une température de transition vitreuse allant de -55° C à -30° C.

Selon un exemple de réalisation de l'invention, ladite composition comprend ledit ou lesdits élastomères diéniques majoritaires selon une quantité de 100 pce.

Selon une variante de réalisation de l'invention, ladite composition comprend un coupage dudit ou desdits élastomères diéniques majoritaires avec ledit ou lesdits élastomères diéniques minoritaires.

Selon un premier mode de réalisation selon l'invention de cette variante, ladite composition comprend un coupage de l'un au moins desdits polybutadiènes présentant un taux d'enchaînements cis-1,4 supérieur à 90 % avec l'un au moins desdits copolymères de styrène et de butadiène préparés en solution.

Selon un second mode de réalisation selon l'invention de cette variante, ladite composition comprend un coupage de l'un au moins desdits polybutadiènes présentant un taux d'enchaînements cis-1,4 supérieur à 90 % avec l'un au moins desdits copolymères de styrène et de butadiène préparés en émulsion.

□ Au sens de la présente invention, on entend par « plastifiant » tout composé non extrait du pétrole, synthétique ou naturel répondant à la définition précitée et toute huile extraite du pétrole de type paraffinique, aromatique ou naphténique, ledit plastifiant incluant également de tels composés et/ou huiles lorsqu'ils sont utilisés pour l'extension d'un élastomère diénique.

■ De préférence, le plastifiant selon l'invention comprend :
- ledit ou lesdits composés non extraits du pétrole selon une fraction massique allant de 60 % à 100 % et, à titre encore plus préférentiel, allant de 80 % à 100 %, et
- ladite ou lesdites huiles extraites du pétrole selon une fraction massique allant de 40 % à 0 % et, à titre encore plus préférentiel, allant de 20 % à 0 %.

Selon un exemple particulièrement avantageux de réalisation de l'invention, ledit plastifiant comprend ledit ou lesdits composés non extraits du pétrole selon une fraction massique égale à 100 %.

Selon une autre caractéristique de l'invention, ladite composition comprend :
- ledit ou lesdits composés non extraits du pétrole, selon une quantité allant de préférence, de 20 à 35 pce, et
- ladite ou lesdites huiles extraites du pétrole, selon une quantité allant de préférence, de 0 à 20 pce.

On notera que ces quantités réduites, voire nulles, d'huiles extraites du pétrole (telle que l'huile aromatique) qui sont utilisées à titre préférentiel dans les compositions de bande de roulement selon l'invention permettent aux pneumatiques les incorporant de contribuer notablement à la préservation de l'environnement, en raison du caractère peu polluant desdits composés non extraits du pétrole en comparaison de celui des huiles aromatiques, en particulier.

■ De préférence, l'ensemble constitué par le ou les acides gras dont dérivent respectivement le ou les triesters d'acide(s) gras de glycérol que comprennent ledit ou lesdits composés non extraits du pétrole, comprend de l'acide oléique selon une fraction massique égale ou supérieure à 85%.

■ Selon l'invention, ledit plastifiant comprend, à titre de composé non extrait du pétrole, au moins une huile végétale constituée dudit triester d'acide oléique de glycérol (tri(cis-9-octadécénoate) de glycérol ou trioléate de glycérol, également appelé trioléine).

A titre d'huile végétale, on utilise une huile de tournesol qui est telle que l'ensemble des acides gras dont elle dérive comprend l'acide oléique selon une fraction massique égale ou supérieure à 70 % et, selon un mode particulièrement avantageux de réalisation de l'invention, selon une fraction massique égale ou supérieure à 85 %.

On notera que cette utilisation d'une huile végétale à titre de plastifiant dans la composition de bande de roulement selon l'invention contribue encore à la préservation de l'environnement, de par la nature non polluante d'une telle huile naturelle.

On notera que le plastifiant selon l'invention, à base de ladite huile végétale, présente une miscibilité (ou compatibilité) satisfaisante avec ces copolymères S-SBR présentant un taux d'enchaînements trans-1,4 supérieur à 50 %. A titre de comparaison, des plastifiants à base d'huiles paraffiniques (de plus en plus utilisées en remplacement des huiles aromatiques) ne sont pas miscibles avec ces copolymères S-SBR à taux élevé d'enchaînements trans-1,4.

On notera également que les huiles végétales selon l'invention peuvent être utilisées pour étendre tous types d'élastomères diéniques, outre ces copolymères S-SBR, à la différence des huiles d'extensions de type paraffinique.

■ Selon une variante de réalisation de l'invention, ladite composition comprend en outre, à titre de composé plastifiant non extrait du pétrole, au moins une résine plastifiante hydrocarbonée selon une quantité allant de 5 à 20 pce, cette résine étant miscible dans ledit ou lesdits élastomères diéniques et présentant une température de transition vitreuse (Tg) comprise entre 10° C et 150° C et une masse moléculaire moyenne en nombre comprise entre 400 g/mol et 2000 g/mol.

Cette résine plastifiante de « haute Tg » peut être avantageusement utilisée pour élever selon un nombre déterminé de degrés° C la Tg d'une composition comprenant essentiellement le trioléate de glycérol ou ladite huile végétale à titre de plastifiant (caractérisés par une Tg relativement basse de l'ordre de -90° C), de sorte à obtenir pour la composition finale la Tg précisément souhaitée pour l'adhérence sur sols secs ou humides.

De plus, cette résine plastifiante selon l'invention associée auxdits composés plastifiants non extraits du pétrole permet de conférer une endurance améliorée à une enveloppe de pneumatique l'incorporant dans sa bande de roulement, dans la mesure où elle améliore la résistance de l'enveloppe à la séparation des nappes sommet de triangulation qu'elle comporte dans son armature de sommet.

On notera que cette résine plastifiante selon l'invention permet également de supprimer la présence d'huile plastifiante extraite du pétrole dans la bande de roulement, ce qui remédie notamment à l'inconvénient précité de migration d'une telle huile, telle qu'une huile aromatique, vers les mélanges adjacents à ladite bande de roulement.

La résine plastifiante qui est spécifiquement sélectionnée pour être utilisée dans la composition selon l'invention est une résine exclusivement hydrocarbonée, c'est-à-dire qui ne comporte que des atomes de carbone et d'hydrogène.

Sont utilisables dans la composition selon l'invention :
- les résines hydrocarbonées de type « aliphatique » définies dans l'article de M.J. Zohuriaan-Mehr et H.Omidian J.M.S REV MACROMOL. CHEM. PHYS. C40(1),23-49 (2000) c'est-à-dire dont la chaîne hydrocarbonée est réalisée à partir de coupes C4-C6 contenant des quantités variables de pipérylène, d'isoprène, de mono-oléfines en addition avec des composés paraffiniques non polymérisables. A titre de résines aliphatiques, conviennent par exemple les résines à base de pentène, de butène, d'isoprène, de pipérylène et comprenant des quantités réduites de cyclopentadiène ou de dicyclopentadiène;
- les résines hydrocarbonées de type « aromatique », définies dans l'article de M.J. Zohuriaan-Mehr et H.Omidian J.M.S REV MACROMOL. CHEM. PHYS. C40(1),23-49 (2000) c'est-à-dire dont la chaîne hydrocarbonée est constituée d'unités aromatiques de type styrène, xylène, α-méthylstyrène, vinyl toluène, indène. A titre de résines aromatiques, conviennent par exemple les résines à base d'α-méthylstyrène et de méthylène, ainsi que les résines à base de coumarone et d' indène ; et
- les résines intermédiaires de type « aliphatique/ aromatique », c'est-à-dire dans lesquelles la fraction massique d'unités aliphatiques est comprise entre 80 % et 95 % (la fraction massique d'unités aromatiques étant par conséquent comprise entre 5 % et 20 %).

De préférence, la résine plastifiante de la composition selon l'invention présente une température de transition vitreuse allant de 30° C à 100° C, une masse moléculaire moyenne en nombre comprise entre 400 et 1000 g/mol, et un indice de polymolécularité inférieur à 2.

Selon un exemple de réalisation de l'invention, on utilise à titre de résine plastifiante une résine aliphatique qui présente une température de transition vitreuse allant de 50° C à 90° C et dont les fractions massiques d'unités aliphatiques et aromatiques sont respectivement supérieures à 95 % et inférieures à 3 %.

Selon une variante de réalisation de l'invention, on utilise à titre de résine plastifiante une résine aromatique qui présente une température de transition vitreuse allant de 30 à 60° C et dont les fractions massiques d'unités aliphatiques et aromatiques varient respectivement de 30 % à 50 % et de 70 % à 50 %.

Selon une autre variante de réalisation de l'invention, on utilise à titre de résine plastifiante une résine de type aliphatique/ aromatique qui présente une température de transition vitreuse de 60° C et dont les fractions massiques d'unités aliphatiques et aromatiques sont respectivement de 80 % et 20 %.

Selon un exemple avantageux de réalisation de l'invention, ladite composition comprend ladite résine plastifiante selon une quantité allant de 10 à 20 pce.

□ La charge renforçante des compositions selon l'invention est définie comme suit.
- Selon un exemple de réalisation de l'invention, ladite composition comprend du noir de carbone à titre de charge renforçante selon une quantité allant par exemple de 60 à 200 pce.

Conviennent à ce titre tous les noirs de carbone conventionnellement utilisés dans les enveloppes de pneumatique et particulièrement dans les bandes de roulement de telles enveloppes, notamment les noirs du type HAF, ISAF, SAF. On peut citer à titre non limitatif les noirs N115, N134, N234, N339, N347, N375.

On notera que le trioléate de glycérol ou l'huile végétale selon l'invention sont particulièrement avantageux pour plastifier des compositions de bande de roulement de type « tourisme haut de gamme » ou compétition, qui comprennent typiquement une quantité de noir de carbone très élevée, par exemple comprise entre 150 et 200 pce, du fait qu'ils peuvent être utilisés en quantités relativement élevées dans ces compositions fortement chargées sans pour autant migrer ou exsuder de la bande de roulement, pratiquement (contrairement aux huiles aromatiques, notamment).
- Selon un autre exemple de réalisation de l'invention, ladite composition comprend une charge blanche renforçante à titre de charge renforçante.

Dans la présente demande, on entend par "charge blanche renforçante" une charge "blanche" (c'est-à-dire une charge inorganique, en particulier minérale), parfois aussi appelée charge "claire", capable de renforcer à elle seule, sans autre moyen qu'un système de couplage intermédiaire, une composition de caoutchouc destinée à la fabrication d'enveloppes de pneumatique, en d'autres termes capable de remplacer dans sa fonction de renforcement une charge conventionnelle de noir de carbone de grade pneumatique.

Préférentiellement, la charge blanche renforçante est, en totalité ou tout du moins majoritairement, de la silice (SiO₂). La silice utilisée peut être toute silice renforçante connue de l'homme du métier, notamment toute silice précipitée présentant une surface BET ainsi qu'une surface spécifique CTAB toutes deux inférieures à 450 m²/g, même si les silices précipitées hautement dispersibles sont préférées.

A titre encore plus préférentiel, ladite silice présentant des surfaces spécifiques BET ou CTAB qui vont toutes deux de 80 m²/g à 260 m²/g.

Dans le présent exposé, la surface spécifique BET est déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices hautement dispersibles telles que décrites ci-dessus.

A titre de charge blanche renforçante, on peut également utiliser, à titre non limitatif,
* des alumines (de formule Al₂O₃), telles que les alumines à dispersibilité élevée qui sont décrites dans le document de brevet européen EP-A-810 258, ou encore
* des hydroxydes d'aluminium, tels que ceux décrits dans le document de brevet international WO-A-99/28376.

On notera que le composé plastifiant non extrait du pétrole selon la présente invention, de par son caractère fortement polaire, est particulièrement bien adapté pour interagir avec une charge blanche renforçante, telle que la silice, et que ledit composé présente une affinité avec cette dernière qui est sensiblement supérieure à celle d'une huile plastifiante aromatique, en particulier.

Il résulte de cette interaction ou affinité améliorée avec la charge blanche renforçante une réduction des pertes en fractions solubles dudit composé plastifiant.
- Selon une variante de réalisation de l'invention, on utilise un coupage (mélange) d'une charge blanche renforçante et de noir de carbone, à titre de charge renforçante. Les noirs de carbone qui sont partiellement ou intégralement recouverts de silice conviennent également pour constituer la charge renforçante. Conviennent également les noirs de carbone modifiés par de la silice tels que, à titre non limitatif, les charges renforçantes qui sont commercialisées par la société CABOT sous la dénomination « CRX 2000 », et qui sont décrites dans le document de brevet international WO-A-96/37547.

□ On notera que le ou l'un au moins des élastomères diéniques utilisables dans la composition selon l'invention peut comporter un ou plusieurs groupes fonctionnels spécifiquement actifs pour un couplage à ladite charge renforçante.
- Pour un couplage à du noir de carbone, on peut par exemple citer des groupes fonctionnels comprenant une liaison C-Sn. De tels groupes peuvent être obtenus comme connu en soi par réaction avec un agent de fonctionnalisation de type organohalogénoétain pouvant répondre la formule générale R₃SnCl, ou avec un agent de couplage de type organodihalogénoétain pouvant répondre à la formule générale R₂SnCl₂, ou avec un agent d'étoilage de type organotrihalogénoétain pouvant répondre à la formule générale RSnCl₃, ou de type tétrahalogénoétain pouvant répondre à la formule SnCl₄ (où R est un radical alkyle, cycloalkyle ou aryle).

Pour un couplage au noir de carbone, on peut également citer des groupes fonctionnels aminés, par exemple obtenus en utilisant la 4,4'-bis-(diéthylaminobenzophénone), encore appelée DEAB. A titre d'exemple, on peut citer les documents de brevet FR-A-2 526 030 et US-A- 4 848 511.
- Pour un couplage à une charge blanche renforçante, conviennent tous les groupes fonctionnels, couplés ou étoilés qui sont connus de l'homme du métier pour un couplage à la silice. A titre non limitatif, conviennent :
- les groupes silanol ou polysiloxane ayant une extrémité silanol, comme cela est décrit dans le document de brevet français FR-A-2 740 778 au nom de la demanderesse.

Plus précisément, ce document enseigne l'utilisation d'un agent de fonctionnalisation d'un polymère vivant obtenu par voie anionique, en vue d'obtenir une fonction active pour un couplage à de la silice. Cet agent de fonctionnalisation est constitué d'un polysiloxane cyclique, tel qu'un polyméthylcyclo -tri, -tétra ou -déca siloxane, ledit agent étant, à titre préférentiel, l'hexaméthylcyclotrisiloxane. Les polymères fonctionnalisés ainsi obtenus peuvent être séparés du milieu réactionnel conduisant à leur formation par extraction à la vapeur d'eau du solvant, sans que leur macrostructure et, par conséquent, leurs propriétés physiques n'évoluent.
- les groupes alkoxysilane.

On peut citer à ce titre la réaction de fonctionnalisation décrite dans le document de brevet international WO-A-88/05448 en vue d'un couplage à de la silice, qui consiste à faire réagir sur un polymère vivant obtenu par voie anionique un composé alkoxysilane ayant au moins un reste alkoxyle non hydrolysable. Ce composé est choisi parmi les halogénoalkylalkoxysilane.

On peut également citer le document de brevet français FR-A-2 765 882, au titre de l'obtention de fonctions alkoxysilane. Ce document divulgue l'utilisation d'un trialkoxysilane, tel que le 3-glycidyloxypropyltrialkoxysilane, pour la fonctionnalisation d'un polymère diénique vivant, en vue du couplage à du noir de carbone ayant de la silice fixée à sa surface à titre de charge renforçante majoritaire.

□ Dans le cas où l'on utilise, à titre de charge renforçante, une charge blanche renforçante, la composition de caoutchouc selon l'invention comprend en outre de manière classique un agent de liaison charge blanche renforçante / matrice élastomère (encore appelé agent de couplage), qui a pour fonction d'assurer une liaison (ou couplage) suffisante, de nature chimique et/ou physique, entre ladite charge blanche et la matrice, tout en facilitant la dispersion de cette charge blanche au sein de ladite matrice.

Un tel agent de liaison, au moins bifonctionnel, a par exemple comme formule générale simplifiée « Y-T-X », dans laquelle:
- Y représente un groupe fonctionnel (fonction « Y ») qui est capable de se lier physiquement et/ou chimiquement à la charge blanche, une telle liaison pouvant être établie, par exemple, entre un atome de silicium de l'agent de couplage et les groupes hydroxyle (OH) de surface de la charge (par exemple les silanols de surface lorsqu'il s'agit de silice);
- X représente un groupe fonctionnel (« fonction X ») qui est capable de se lier physiquement et/ou chimiquement à l'élastomère, par exemple par l'intermédiaire d'un atome de soufre;
- T représente un groupe hydrocarboné permettant de relier Y et X.

Ces agents de liaison ne doivent en particulier pas être confondus avec de simples agents de recouvrement de la charge considérée lesquels, de manière connue, peuvent comporter la fonction Y active vis-à-vis de la charge, mais sont dépourvus de la fonction X active vis-à-vis de l'élastomère.

De tels agents de liaison, d'efficacité variable, ont été décrits dans un très grand nombre de documents et sont bien connus de l'homme du métier. On peut utiliser en fait tout agent de liaison connu pour ou susceptible d'assurer efficacement, dans les compositions de caoutchouc diénique utilisables pour la fabrication de pneumatiques, la liaison entre silice et élastomère diénique, tels que par exemple des organosilanes, notamment des alkoxysilanes polysulfurés ou des mercaptosilanes, ou des polyorganosiloxanes porteurs des fonctions X et Y précitées.

L'agent de couplage préférentiellement utilisé dans les compositions de caoutchouc conformes à l'invention est un alkoxysilane polysulfuré, porteur de manière connue de deux fonctions notées ici "Y" et "X", greffable d'une part sur la charge blanche au moyen de la fonction "Y" (fonction alkoxysilyle) et d'autre part sur l'élastomère au moyen de la fonction "X" (fonction soufrée):

On utilise en particulier des alkoxysilanes polysulfurés, dits "symétriques" ou "asymétriques" selon leur structure particulière, tels que décrits par exemple dans les brevets US-A-3 842 111, US-A-3 873 489, US-A-3 978 103, US-A-3 997 581, US-A-4 002 594, US-A-4 072 701, US-A-4 129 585, ou dans les brevets plus récents US-A-5 580 919, US-A-5 583 245, US-A-5 650 457, US-A-5 663 358, US-A-5 663 395; US-A-5 663 396, US-A-5 674 932, US-A-5 675 014, US-A-5 684 171, US-A-5 684 172, US-A-5 696 197, US-A-5 708 053, US-A-5 892 085, EP-A-1 043 357 qui énoncent en détail de tels composés connus.

Conviennent en particulier pour la mise en oeuvre de l'invention, sans que la définition ci-après soit limitative, des alkoxysilanes polysulfurés dits "symétriques" répondant à la formule générale (I) suivante:
(I) Z - A - Sₙ - A - Z , dans laquelle:
   - n est un entier de 2 à 8;
   - A est un radical hydrocarboné divalent;
   - Z répond à l'une des formules ci-après: 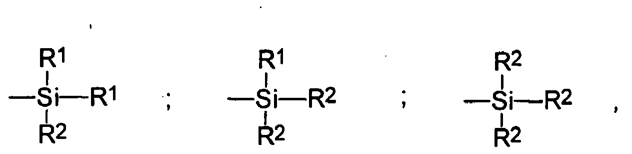 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ ;
   - les radicaux R², substitués ou non substitués, identiques ou différents entre eux, représentent un groupe alkoxyle en C₁-C₁₈ ou cycloalkoxyle en C₅-C₁₈.

Dans la formule (I) ci-dessus, le nombre n est de préférence un nombre entier de 3 à 5.

Dans le cas d'un mélange d'alkoxysilanes polysulfures répondant à la formule (I) ci-dessus, notamment des mélanges usuels disponibles commercialement, la valeur moyenne des "n" est un nombre fractionnaire, de préférence compris entre 3 et 5, plus préférentiellement proche de 4.

Le radical A, substitué ou non substitué, est de préférence un radical hydrocarboné divalent, saturé ou non saturé, comportant de 1 à 18 atomes de carbone. Conviennent notamment des groupements alkylène en C₁-C₁₈ ou des groupements arylène en C₆-C₁₂, plus particulièrement des alkylènes en C₁-C₁₀, notamment en C₂-C₄, en particulier le propylène.

Les radicaux R¹ sont préférentiellement des groupes alkyle en C₁-C₆, cyclohexyle ou phényle, notamment des groupes alkyle en C₁-C₄, plus particulièrement le méthyle et/ou l'éthyle.

Les radicaux R² sont préférentiellement des groupes alkoxyle en C₁-C₈ ou cycloalkoxyle en C₅-C₈, plus particulièrement le méthoxyle et/ou l'éthoxyle.

De tels alkoxysilanes polysulfurés dits "symétriques", ainsi que certains de leurs procédés d'obtention sont par exemple décrits dans les brevets récents US-A- 5 684 171 et US-A- 5 684 172 donnant une liste détaillée de ces composés connus, pour n variant de 2 à 8.

Préférentiellement, l'alkoxysilane polysulfuré mis en oeuvre dans l'invention est un polysulfure, en particulier un tétrasulfure, de bis(alkoxyl(C₁-C₄)silylpropyle), plus préférentiellement de bis(trialkoxyl(C₁-C₄)silylpropyle), notamment de bis(3-triéthoxysilylpropyle) ou de bis(3-triméthoxysilylpropyle).

A titre d'exemple particulièrement préférentiel, on utilise le tétrasulfure de bis(triéthoxysilylpropyle) ou TESPT, de formule [(C₂H₅O)₃Si(CH₂)₃S₂]₂, commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas mélange commercial de polysulfures avec une valeur moyenne pour n qui est proche de 4).

Dans les compositions de caoutchoucs conformes à l'invention, la teneur en alkoxysilane polysulfuré peut être comprise dans un domaine de 1 % à 15% par rapport au poids de charge blanche renforçante.

Bien entendu, l'alkoxysilane polysulfuré pourrait être préalablement greffé (via la fonction "X") sur l'élastomère diénique de la composition de l'invention, l'élastomère ainsi fonctionnalisé ou "précouplé" comportant alors la fonction "Y" libre pour la charge blanche renforçante. L'alkoxysilane polysulfuré pourrait également être préalablement greffé (via la fonction "Y") sur la charge blanche renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état cru, utiliser l'agent de couplage, soit greffé sur la charge blanche renforçante, soit à l'état libre (i.e., non greffé).

□ Les compositions conformes à l'invention peuvent être préparées selon les procédés connus de travail thermo-mécanique des constituants en une ou plusieurs étapes. On peut par exemple les obtenir par un travail thermo-mécanique en une étape dans un mélangeur interne qui dure de 3 à 7 minutes, avec une vitesse de rotation des palettes de 50 tours par minute, ou en deux étapes dans un mélangeur interne qui durent respectivement de 3 à 5 minutes et de 2 à 4 minutes, suivies d'une étape de finition effectuée à environ 80° C, pendant laquelle sont incorporés le soufre et les accélérateurs de vulcanisation dans le cas d'une composition à réticuler au soufre.

□ Les compositions selon l'invention contiennent, outre le ou les élastomères diéniques précités, ledit plastifiant, ladite charge renforçante et éventuellement ledit agent de liaison charge blanche renforçante/ élastomère, tout ou partie des autres constituants et additifs habituellement utilisés dans les mélanges de caoutchouc, comme des pigments, antioxydants, cires anti-ozonantes, un système de réticulation par exemple à base de soufre et/ou de peroxyde et/ou de bismaléimides, un ou des agents de recouvrement de l'éventuelle charge blanche renforçante, tels que des alkylalkoxysilanes, polyols, amines, amides, etc...

On notera que les compositions de l'invention peuvent être avantageusement destinées à la fabrication de pneumatiques comportant une bande de roulement de couleur, c'est-à-dire à base d'une composition colorée dont une partie au moins est d'une couleur autre que le noir conventionnel, y compris d'une couleur blanche.

A la charge blanche renforçante peut être également associée, si besoin est, une charge blanche conventionnelle non renforçante, telle que des argiles, la bentonite, le talc, la craie, le kaolin, voire des oxydes de titane remplissant une fonction d'agent de pigmentation.

Pour la fabrication de compositions de caoutchouc de couleur, on peut utiliser, outre les pigments, tout type d'agent colorant connu de l'homme du métier, cet agent colorant pouvant être organique ou inorganique, soluble ou non dans les compositions conformes à l'invention.

A titre d'exemple, on peut citer des colorants minéraux tels que par exemple des métaux en poudre, notamment du cuivre ou de l'aluminium en poudre, ou divers oxydes métalliques, notamment des silicates, des aluminates, des titanates, des oxydes ou hydroxydes de fer, des oxydes mixtes d'éléments métalliques différents tels que Co, Ni, Al, Zn. On peut citer également des pigments organiques tels que des indanthrones, des dikéto-pyrrolo-pyrroles ou des condensés diazo, des pigments organométalliques tels que des phtalocyanines.

La couleur des compositions conformes à l'invention peut ainsi varier dans une très large gamme, à titre d'exemple dans différentes teintes de rouge, orange, vert, jaune, bleu ou encore de marron ou de gris.

Une bande de roulement d'enveloppe de pneumatique selon l'invention est constituée d'une composition de caoutchouc telle que celle décrite ci-dessus, et une enveloppe de pneumatique selon l'invention est telle qu'elle comporte cette bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

□ Les températures de transition vitreuse Tg des élastomères et des plastifiants ont été mesurées au moyen d'un calorimètre différentiel (« differential scanning calorimeter »).

□ Détermination de là masse moléculaire de la résine utilisée dans la composition selon l'invention par la technique de chromatographie d'exclusion par la taille (SEC).

La chromatographie d'exclusion par la taille ou SEC permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires des résines. A partir de produits étalons commerciaux de polystyrène de basse masse moléculaire (comprise entre 104 et 90000 g/mol), les différentes masses moyennes en nombre Mn et en poids Mp sont déterminées et l'indice de polydispersité Ip calculé.

L'échantillon de résine est solubilisé dans du tétrahydrofurane à une concentration d'environ 1 g/l.

L'appareillage utilisé est un chromatographe « WATERS, modèle Alliance 2690 ». Le solvant d'élution est le tétrahydrofurane (phase mobile), le débit de 1 ml/min., la température du système de 35°C et la durée d'analyse de 40 min. On utilise pour la phase stationnaire un jeu de trois colonnes en série, de dénominations commerciales respectives « WATERS type STYRAGEL HR4E » (colonne à lit mélangé), « WATERS type STYRAGEL HR1 » (de porosité 100 Angstrom) et « WATERS STYRAGEL HR0.5 » (de porosité 50 Angstrom).

Le volume injecté de la solution de l'échantillon de résine est 100 µl. Le détecteur est un réfractomètre différentiel « WATERS modèle 2410 » et le logiciel d'exploitation des données chromatographiques est le système « WATERS-MILLENIUM » (version 3-2).

□ Les propriétés des compositions de caoutchouc ont été mesurées comme suit.
- Viscosité Mooney : ML(1+4) à 100° C mesurée selon la norme ASTM D-1646.
- Modules d'allongement MA10 (à 10 %), MA100 (à 100 %) et MA300 (à 300 %) mesurés selon la norme ASTM D 412.
- Indice de cassage Scott : force à la rupture (MPa) et allongement (en %) mesurés à 23° C.
- Pertes hystérétiques (PH) : mesurées par rebond à 60° C (la déformation pour les pertes mesurées est d'environ 40 %).

□ Pour l'exemple 1 ci-après, les performances des enveloppes de pneumatique ont été mesurées au moyen d'indices relatifs de performances, par rapport à un indice 100 de référence caractérisant une enveloppe « témoin » (un indice de performance supérieur à cette base 100 rendant compte d'une performance supérieure à celle de l'enveloppe « témoin » correspondante).

L'adhérence de chaque enveloppe de pneumatique testée a été évaluée par la mesure de distances de freinage en mode de freinage « deux roues bloquées » et en mode de freinage « ABS », sur sol sec et/ou sur sol humide. Plus précisément, la distance de freinage en mode « deux roues bloquées » a été mesurée en passant d'une vitesse de 40 km/h à une vitesse de 0 km /h sur sol humide, alors que la distance de freinage en mode « ABS » a été mesurée, sur sol sec, en passant d'une vitesse de 70 km/h à 20 km/h et, sur sol humide, en passant d'une vitesse de 40 km/h à 10 km/h.

□ La résistance des enveloppes de pneumatique à la séparation des nappes sommet a été évaluée au moyen d'indices relatifs de performance, par rapport à un indice 100 de référence caractérisant une enveloppe « témoin » (un indice de performance supérieur à cette base 100 rendant compte d'une performance supérieure à celle de l'enveloppe « témoin » correspondante).

Cette résistance a été mesurée par un test de roulage sur un volant, dont la surface est pourvue d'obstacles (barrettes et « polars » qui viennent solliciter les bords de la ceinture de l'enveloppe constituée de deux nappes sommet de travail NST1 et NST2), à une température ambiante de 20° C, sous une charge de 490 daN et à une vitesse de 75 km/h, la pression interne de l'enveloppe étant régulée à 2,5 bars. Ce test est stoppé lorsqu'on détecte une déformation de l'armature de sommet de l'enveloppe.

Chaque enveloppe a été préalablement « étuvée » (non montée) durant 4 semaines à 65° C.

On a testé sur ce volant deux enveloppes « témoin » et deux enveloppes selon chaque mode de réalisation de l'invention. Les résultats obtenus sont exprimés sous la forme d'une performance kilométrique (base 100 pour la moyenne des deux enveloppes « témoin ») et d'une longueur moyenne fissurée (en mm) entre les deux nappes sommet NST1 et NST2.

On a par ailleurs prélevé un échantillon de la composition de caoutchouc constituant la ceinture de l'enveloppe au centre de celle-ci et entre les deux nappes NST1 et NST2, dans l'une des deux enveloppes de chaque essai « témoin » et selon l'invention, et l'on a réalisé une mesure de la fraction soluble dans le cyclohexane (FS %) correspondant à ces prélèvements.

### EXEMPLE 1 (exemple comparatif)

On a préparé une composition de caoutchouc « témoin » T1, quatre compositions de caoutchouc non conformes à l'invention NC1 à NC4 et une composition de caoutchouc I1, chacune étant destinée à constituer une bande de roulement d'un pneumatique de type « tourisme ». Le tableau 1 suivant contient :
- la formulation de chacune de ces compositions T1, NC1 à NC4 et I1 ;
- les propriétés de chaque composition à l'état non réticulé et réticulé;
- les performances de pneumatiques dont les bandes de roulement respectives sont constituées de ces compositions.

**Tableau 1 :**

| | **T1** | **NC1** | **NC2** | **NC3** | **NC4** | **I1** |
|---|---|---|---|---|---|---|
| **FORMULATION (pce)** | | | | | | |
| Matrice élastomère | | | | | | |
| S-SBR A | 58 | 77 | 72 | 80 | 72 | 85 |
| BRA | 42 | 23 | 28 | 20 | 28 | 15 |
| Charge renforçante: silice «ZEOSIL 160MP» | 80 | 80 | 80 | 80 | 80 | 80 |
| Noir de carbone N234 | 6 | 6 | 6 | 6 | 6 | 6 |
| Agent de couplage : TESPT (« Si 69 » ) | 6,4 | 6,4 | 6,4 | 6,4 | 6,4 | 6,4 |
| Acide stéarique / ZnO | 2 / 2,5 | 2 / 2,5 | 2 / 2,5 | 2 / 2,5 | 2 / 2,5 | 2 / 2,5 |
| DPG (diphénylguanidine) | 1,5 | 1,5 | 1,5 | 1,5 | 1,5 | 1,5 |
| Anti-oxydant (6PPD) | 2 | 2 | 2 | 2 | 2 | 2 |
| soufre/accélérateur (CBS)° | 1,1 /2 | 1,1 /2 | 1,1 /2 | 1,1/2 | 1,1/2 | 1,1/2 |
| Huile aromatique « haute viscosité » | 39,5 | 25 | 24 | 22 | 23 | 11 |
| Trioléate de glycérol (de synthèse) | - | - | - | - | 14 | 22 |
| Trioctylphosphate | - | 15 | - | - | - | - |
| Trimellitate | - | - | 16 | - | - | - |
| Octyloléate | - | - | - | 16 | - | - |
| Plastifiant total | 39,5 | 40 | 40 | 38 | 37 | 33 |

| **PROPRIETES** | | | | | | |
|---|---|---|---|---|---|---|
| ML(1+4) à 100° C | 102 | 95 | 98 | 93 | 100 | 80 |
| Shore A | 66 | 66 | 66 | 66 | 66 | 66 |
| MA 10 à 23° C | 6 | 5,5 | 5,6 | 6 | 5,7 | 5,9 |
| PH à 60° C (%) | 30 | 28 | 30 | 33 | 31 | 33 |
| Contrainte rupture (MPa) | 50 | 60 | 65 | 80 | 70 | 85 |
| Allongement rupture (%) | 220 | 260 | 285 | 350 | 310 | 410 |

| **PERFORMANCES DES ENVELOPPES DE PNEUMATIQUE (175/70 R14 « MXT »)** | | | | | | |
|---|---|---|---|---|---|---|
| **Adhérence** | | | | | | |
| (à 23° C pour une « Renault Laguna 2 l ») | | | | | | |
| - freinage sol sec ABS | 100 | 99 | 101 | 100 | 102 | 102 |
| - freinage sol mouillé ABS | 100 | 107 | 102 | 103 | 104 | 108 |
| - freinage sol mouillé roues bloquées | 100 | 99 | 99 | 100 | 106 | 107 |
| **Tassement** (en performance) | 100 | 93 | 95 | 96 | 106 | 115 |

- Avec S-SBR A : copolymère de styrène et de butadiène préparé en solution (sans huile d'extension) présentant
   un taux d'enchaînements 1,2 de 58 %,
   un taux d'enchaînements styréniques de 25 %,
   un taux d'enchaînements trans de 23 %,
   une viscosité Mooney ML(1+4) à 100° C de 54, et
   une température de transition vitreuse Tg de -30° C.
- Avec BR A : polybutadiène présentant
   un taux d'enchaînements cis-1,4 d'environ 93 %, et
   une température de transition vitreuse Tg de -103° C.
- Avec 6PPD : N-(1,3-dimétyl-butyl)-N'-phényl-p-phénylènediamine, et
   CBS : N-cyclohexyl-benzothiazyl-sulfénamide.

Ces résultats montrent que la composition de bande de roulement I1 comprenant majoritairement de la silice à titre de charge renforçante et un plastifiant (comprenant majoritairement du trioléate de glycérol à titre de composé plastifiant non extrait du pétrole), permet d'améliorer d'une manière significative la résistance au tassement de la bande de roulement correspondante en roulage et d'améliorer notablement l'adhérence sur sol sec et sur sol humide, par rapport à la composition « témoin » dont le plastifiant est constitué d'une huile aromatique et également par rapport à des compositions comprenant des plastifiants non conformes à l'invention.

### EXEMPLE 2

On a préparé deux compositions de bande de roulement « témoin » T2 et T3, et six compositions I2 à I7, pour pneumatiques de type « tourisme ». Le tableau 2 suivant présente les résultats obtenus :

**Tableau 2 :**

| | **T2** | **T3** | **I2** | **I3** | **I4** | **I5** | **I6** | **I7** |
|---|---|---|---|---|---|---|---|---|
| **FORMULATION (pce)** | | | | | | | | |
| Matrice élastomère | | | | | | | | |
| S-SBR A | - | 75 | - | - | - | - | 85 | 90 |
| E-SBR A | 80 | - | 80 | 100 | 100 | 100 | - | - |
| BR A | 20 | 25 | 20 | - | - | - | 15 | 10 |
| Charge renforçante : | | | | | | | | |
| N234 | - | 60 | - | - | - | - | 60 | 60 |
| N134 | 80 | - | 80 | 80 | 80 | 80 | - | - |
| Acide stéarique / ZnO | 0,5/2,5 | 0,5/2,5 | 0,5/2,5 | 0,5/2,5 | 0,5/2,5 | 0,5/2,5 | 0,5/2,5 | 0,5/2,5 |
| Anti-oxydant (6PPD) | 2,4 | 2,4 | 2,4 | 2,4 | 2,4 | 2,4 | 2,4 | 2,4 |
| Soufre / accélérateur (CBS)° | 1,5/1,4 | 1,4/1,4 | 1,5/1,4 | 1,5/1,4 | 1,5/1,4 | 1,5/1,4 | 1,4/1,4 | 1,4/1,4 |
| Huile aromatique « haute viscosité » | 46 | 25 | 30 | 6 | 6 | 6 | 8 | - |
| Trioléate de glycérol (de synthèse) | - | - | 16 | 30 | - | - | 14 | 18 |
| Huile de tournesol « oléique » (taux d'acide oléique de 85 %) | - | - | - | - | 30 | - | - | - |
| Huile de tournesol « normale » (taux d'acide oléique de 50 %) | - | - | - | - | - | 30 | - | - |
| Plastifiant total | 46 | 25 | 46 | 36 | 36 | 36 | 22 | 18 |

| | **PROPRIETES** | | | | | | | |
|---|---|---|---|---|---|---|---|---|
| ML(1+4) à 100°C | 80 | 87 | 80 | 65 | 67 | 70 | 72 | 70 |
| Shore A | 60,5 | 58 | 59 | 59 | 59 | 59,5 | 58 | 57 |
| MA10 à 23°C | 4,95 | 4,5 | 4,6 | 4,7 | 4,6 | 4,8 | 4,4 | 4,5 |
| MA100 à 23° C | 2,5 | 2,5 | 2,4 | 2,4 | 2,5 | 2,4 | 2,4 | 2,5 |
| MA300 à 23° C | 4,3 | 4,3 | 4 | 3,9 | 4 | 3,6 | 4,2 | 4 |
| PH à 60° C | 39,5 | 32 | 40,5 | 41 | 40 | 42,5 | 34 | 33 |

| | | | | | | | | |
|---|---|---|---|---|---|---|---|---|
| Seule la composition I₄ est conforme à l'invention. | | | | | | | | |

Avec E-SBR A : copolymère de styrène et de butadiène préparé en émulsion (sans huile d'extension) présentant
un taux d'enchaînements 1,2 de 14,9 %,
un taux d'enchaînements 1,4 de 13,0 %,
un taux d'enchaînements trans de 72,1 %,
un taux d'enchaînements styréniques de 23,9 %,
une viscosité Mooney ML(1+4) à 100° C égale à 46, et
une température de transition vitreuse Tg de -53° C.

Ces résultats montrent que l'utilisation d'un plastifiant dans les compositions de bande de roulement I2 à I7 qui comprennent du noir de carbone à titre de charge renforçante, permet d'améliorer globalement l'aptitude à la mise en oeuvre de ces compositions à l'état non réticulé, sans pénaliser les modules d'allongement ni les pertes hystérétiques à l'état réticulé, par rapport à l'utilisation d'un plastifiant constitué d'une huile aromatique dans les compositions « témoin » T2 et T3.

Plus précisément, à quantité de plastifiant identique (36 pce dont 30 pce de composé plastifiant non extrait du pétrole), ces résultats montrent qu'un tel composé constitué d'huile de tournesol « oléique » (dérivée d'acides gras comprenant de l'acide oléique selon une fraction massique de 85 %) confère à la composition I4 conforme à l'invention l'incorporant des propriétés de modules (notamment le module MA 300) et de pertes hystérétiques d'un niveau globalement supérieur à celui des mêmes propriétés qui sont conférées aux compositions I3 et I5 par le trioléate de glycérol de synthèse et par une huile de tournesol « normale » (dérivée d'acides gras comprenant de l'acide oléique selon une fraction massique de 50 %), respectivement.

### EXEMPLE 3

On a préparé des compositions de bande de roulement « témoin » T4 et I8 à I13, pour pneumatiques de type « tourisme ». Le tableau 3 suivant présente les résultats obtenus :

**Tableau 3 :**

| | **T4** | **I8** | **I9** | **I10** | **I11** | **I12** | **I13** |
|---|---|---|---|---|---|---|---|
| **FORMULATION (pce)** | | | | | | | |
| Matrice élastomère | | | | | | | |
| S-SBR A | 57,5 | 85 | 85 | 85 | 85 | 85 | 85 |
| BRA | 42,5 | 15 | 15 | 15 | 15 | 15 | 15 |
| Charge renforçante : | | | | | | | |
| Silice « ZEOSIL 160MP » | 80 | 80 | 80 | 80 | 80 | 80 | 80 |
| N234 | 10,4 | 10,4 | 10,4 | 10,4 | 10,4 | 10,4 | 10,4 |
| Agent de couplage: TESPT (« Si 69 ») | 6,4 | 6,4 | 6,4 | 6,4 | 6,4 | 6,4 | 6,4 |
| Acide stéarique / ZnO | 2 / 2,5 | 2 / 2,5 | 2 / 2,5 | 2 / 2,5 | 2 / 2,5 | 2 / 2,5 | 2 / 2,5 |
| DPG (diphénylguanidine) | 1,5 | 1,5 | 1,5 | 1,5 | 1,5 | 1,5 | 1,5 |
| Anti-oxydant (6PPD) | 1,9 | 1,9 | 1,9 | 1,9 | 1,9 | 1,9 | 1,9 |
| soufre/accélérateur(CBS)° | 1,1 /2 | 1,1/2 | 1,1 /2 | 1,1/2 | 1,1 /2 | 1,1 /2 | 1,1 /2 |
| Huile aromatique « haute viscosité » | 39,5 | 15,3 | 15,3 | 15,3 | 15,3 | 15,3 | 15,3 |
| Trioléate de glycérol (de synthèse) | - | 22 | - | - | - | - | - |
| Huile de tournesol « oléique » (taux d'acide oléique de 85 %) | - | - | 22 | - | - | - | - |
| Huile de tournesol « normale » (taux d'acide oléique de 50 %) | - | - | - | 22 | - | - | - |
| Huile de colza à taux réduit d'acide érucique | - | - | - | - | 22 | - | - |
| Huile de lin | - | - | - | - | - | 22 | - |
| Huile de colza à taux élevé d'acide érucique | - | - | - | - | - | - | 22 |
| Plastifiant total | 39,5 | 37,3 | 37,3 | 37,3 | 37,3 | 37,3 | 37,3 |

| **PROPRIETES** | | | | | | | |
|---|---|---|---|---|---|---|---|
| ML(1+4) à 100°C | 96 | 80 | 80 | 84 | 70 | 85 | 88 |
| Shore A | 68 | 68 | 67,5 | 68 | 64 | 66 | 68,5 |
| MA10 à 23° C | 6,8 | 7 | 6,7 | 7,1 | 5,7 | 6,7 | 7,2 |
| MA 100 à 23° C | 3,5 | 3,5 | 3,7 | 3,4 | 3 | 3 | 3,6 |
| MA300 à 23° C | 6 | 5,3 | 5,6 | 5 | 4,8 | 4,4 | 5,5 |
| PH à 60° C | 30 | 34 | 32 | 36 | 34 | 37 | 34 |

Ces résultats montrent que l'utilisation d'un plastifiant dans les compositions de bande de roulement I8 à I13 qui comprennent majoritairement de la silice à titre de charge renforçante, permet d'améliorer globalement l'aptitude à la mise en oeuvre de ces compositions à l'état non réticulé, sans pénaliser les modules d'allongement ni les pertes hystérétiques à l'état réticulé, par rapport à l'utilisation d'un plastifiant constitué d'une huile aromatique dans la composition « témoin » T4.

Seule la composition I9 est conforme à l'invention.

Plus précisément, à quantité de plastifiant identique (37,3 pce dont 22 pce de composé plastifiant non extrait du pétrole), ces résultats montrent qu'un tel composé constitué de ladite huile de tournesol « oléique » confère à la composition 19 l'incorporant des propriétés de modules (notamment le module MA 300) et de pertes hystérétiques d'un niveau globalement supérieur à celui des mêmes propriétés qui sont conférées aux compositions I8 et I10 à I13 (comprenant du trioléate de glycérol de synthèse ou d'autres huiles végétales).

### EXEMPLE 4

On a préparé des compositions de bande de roulement « témoin » T5 et T6 et I14 à I17, pour pneumatiques de type « tourisme haut de gamme ». Le tableau 4 présente les résultats obtenus :

**Tableau 4 :**

| | **T5** | **T6** | **I14** | **I15** | **I16** | **I17** |
|---|---|---|---|---|---|---|
| **FORMULATION (pce)** | | | | | | |
| Matrice élastomère | | | | | | |
| S-SBR B | 50 | 80 | 100 | 100 | 100 | 100 |
| S-SBR C | 50 | 20 | - | - | - | - |
| Charge renforçante : | | | | | | |
| Silice « ZEOSIL 160MP » | 88 | 42,5 | 88 | 88 | 42,5 | 42,5 |
| N234 | 7,1 | - | 7,1 | 7,1 | - | - |
| N134 | - | 52,5 | - | - | 52,5 | 52,5 |
| Agent de couplage : TESPT (« Si 69 ») | 7,1 | 3,5 | 7,1 | 7,1 | 3,5 | 3,5 |
| Acide stéarique / ZnO | 1 / 3,0 | 1/3,0 | 1/3,0 | 1 / 3,0 | 1 / 3,0 | 1 / 3,0 |
| DPG (diphénylguanidine) | 1,5 | 1,5 | 1,5 | 1,5 | 1,5 | 1,5 |
| Anti-oxydant (6PPD) | 1,9 | 1,9 | 1,9 | 1,9 | 1,9 | 1,9 |
| soufre / accélérateur (CBS)° | 1,25/1,9 | 1,25 / 1,9 | 1,25/1,9 | 1,25 / 1,9 | 1,25 / 1,9 | 1,25/1,9 |
| Huile aromatique « haute viscosité » | 37,5 | 45,5 | - | - | - | - |
| Trioléate de glycérol (de synthèse) | - | - | 20 | - | 20 | - |
| Huile de tournesol « oléique » (taux d'acide oléique de 85 %) | - | - | - | 20 | - | 20 |
| Résine plastifiante | - | - | 12 | 12 | 17 | 17 |
| Plastifiant total | 37,5 | 45,5 | 32 | 32 | 37 | 37 |

| **PROPRIETES** | | | | | | |
|---|---|---|---|---|---|---|
| ML(1+4) à 100° C | 116 | 109 | 72 | 75 | 80 | 82 |
| Shore A | 75,5 | 71 | 75,5 | 75 | 72 | 71,5 |
| MA 10 à 23° C | 9,9 | 7,2 | 9,9 | 9,7 | 7,5 | 7,3 |
| MA 100 à 23° C | 5,4 | 4,6 | 4,6 | 4,8 | 4,4 | 4,6 |
| MA300 à 23° C | 9 | 7,5 | 6,6 | 7,5 | 6,3 | 6,9 |
| PH à 60° C | 31 | 38 | 39 | 35 | 48 | 45 |

| | | | | | | |
|---|---|---|---|---|---|---|
| Seule la composition I 15 est conforme à l'invention. | | | | | | |

- Avec S-SBR B : copolymère de styrène et de butadiène préparé en solution (sans huile d'extension) présentant
   un taux d'enchaînements styréniques de 29 %,
   un taux d'enchaînements trans-1,4 de 78 %,
   une viscosité Mooney ML(1+4) à 100° C de 58, et
   une température de transition vitreuse Tg de -50° C.
- Avec S-SBR C : copolymère de styrène et de butadiène préparé en solution (sans huile d'extension) présentant
   un taux d'enchaînements 1,2 de 24 %,
   un taux d'enchaînements styréniques de 40 %,
   une viscosité Mooney ML(1+4) à 100° C de 54, et
   une température de transition vitreuse Tg de -30° C.
- Avec résine plastifiante: résine à haute température de transition vitreuse (Tg) commercialisée par la société HERCULES sous la dénomination « R2495 », présentant :
   un taux d'enchaînements aliphatiques de 97 %,
   un taux d'enchaînements aromatiques de 0 %,
   des masses moléculaires moyennes en nombre Mn et en poids Mw respectivement de 820 g/mol et 1060 g/mol, et
   une température de transition vitreuse Tg de 88° C.

Ces résultats montrent que l'utilisation d'un plastifiant qui est totalement dépourvu d'huile extraite du pétrole (aromatique), dans la composition de bande de roulement selon l'invention comprenant un coupage de silice et de noir de carbone à titre de charge renforçante, permet d'améliorer très sensiblement l'aptitude à la mise en oeuvre de ces compositions à l'état non réticulé, sans pénaliser les modules d'allongement ni les pertes hystérétiques à l'état réticulé, par rapport à l'utilisation d'un plastifiant constitué d'une huile aromatique dans les compositions « témoin » T5 et T6 (ces dernières compositions usuelles pour bande de roulement « haut de gamme », très rigides à l'état non réticulé, sont particulièrement difficiles à mettre en oeuvre).

Dans l'exemple de réalisation de l'invention, on notera que l'utilisation de ladite résine plastifiante de haute Tg permet de régler la température de transition vitreuse (Tg) de la composition réticulée comprenant le trioléate de glycérol ou l'huile végétale, qui présentent tous deux une Tg relativement basse contrairement à ladite résine, de manière que la composition finalement obtenue présente sensiblement une même Tg qui soit adaptée aux performances d'adhérence sur sols secs ou humides, en dépit du remplacement de l'huile aromatique par le plastifiant selon l'invention.

## Revendications

1. Composition de caoutchouc réticulable ou réticulée qui est utilisable pour constituer une bande de roulement d'une enveloppe de pneumatique, ladite composition étant à base d'au moins :
o un ou plusieurs élastomères diéniques, et
o un plastifiant comprenant une huile végétale comportant au moins un triester d'acide oléique de glycérol,
**caractérisée en ce que** ledit plastifiant comprend :
o selon une fraction massique allant de 45% à 100%, à titre de ladite huile végétale , une huile de tournesol dont l'acide oléique représente une fraction massique égale ou supérieure à 70% de la totalité d'acide gras, et
o selon une fraction massique allant de 55% à 0%, une ou plusieurs huiles plastifiantes extraites du pétrole, de type paraffinique, aromatique ou naphténique.
et **en ce que** :
o le taux d'huile de tournesol est compris dans un domaine de 10 à 40 pce, et
o le taux d'huile plastifiante optionnelle extraite du pétrole est compris dans un domaine de 0 à 30 pce.

2. Composition de caoutchouc réticulable ou réticulée selon la revendication 1, **caractérisée en ce que** l'acide oléique représente une fraction massique égale ou supérieure à 85% de la totalité de l'acide gras.

3. Composition de caoutchouc réticulable ou réticulée selon une quelconque des revendications précédentes, **caractérisée en ce que** ledit plastifiant comprend :
o ladite huile de tournesol selon une fraction massique allant de 60 % à 100 %, et
o la ou lesdites huiles extraites du pétrole selon une fraction massique allant de 40 % à 0%.

4. Composition de caoutchouc réticulable ou réticulée selon la revendication 3, **caractérisée en ce que** ledit plastifiant comprend :
o ladite huile de tournesol selon une fraction massique allant de 80 % à 100 %, et
o la ou lesdites huiles extraites du pétrole selon une fraction massique allant de 20 % à 0%.

5. Composition de caoutchouc réticulable ou réticulée selon la revendication 4, **caractérisée en ce que** ledit plastifiant comprend ledit ou lesdits composés non extraits du pétrole selon une fraction massique égale à 100 %.

6. Composition de caoutchouc réticulable ou réticulée selon la revendication 1, **caractérisée en ce qu'**elle comprend :
o ledit ou lesdits composés non extraits du pétrole, selon une quantité allant de 20 à 35 pce, et
o ladite ou lesdites huiles extraites du pétrole, selon une quantité allant de 0 à 20 pce.

7. Composition de caoutchouc réticulable ou réticulée selon une quelconque des revendications 1 à 6, **caractérisée en ce qu'**elle comprend, à titre d'élastomère(s) diénique(s) :
o selon une quantité supérieure à 50 pce et allant jusqu'à 100 pce, un ou plusieurs élastomères diéniques, ou élastomères majoritaires, présentant chacun une température de transition vitreuse comprise entre -65°C et -10°C, et
o selon une quantité inférieure à 50 pce et allant jusqu'à 0 pce, un ou plusieurs élastomères diéniques, ou élastomères minoritaires, présentant chacun une température de transition vitreuse comprise entre -110°C et -80°C.

8. Composition de caoutchouc réticulable ou réticulée selon la revendication 7, **caractérisée en ce que** :
o ledit ou lesdits élastomères diéniques majoritaires appartiennent au groupe constitué par des copolymères de styrène et de butadiène préparés en solution, des copolymères de styrène et de butadiène préparés en émulsion, des polyisoprènes naturels, des polyisoprènes de synthèse présentant un taux d'enchaînements cis-1,4 supérieur à 95% et par un mélange de ces élastomères, et
o ledit ou lesdits élastomères diéniques minoritaires comprennent des polybutadiènes présentant un taux d'enchaînements cis-1,4 supérieur à 90%.

9. Composition de caoutchouc réticulable ou réticulée selon la revendication 8, **caractérisée en ce qu'**elle comprend des copolymères de styrène et de butadiène préparés en solution présentant une température de transition vitreuse allant de -50°C à -15°C et un taux d'enchaînements trans-1,4 butadiène qui est supérieur à 50%.

10. Composition de caoutchouc réticulable ou réticulée selon la revendication 8, **caractérisée en ce qu'**elle comprend des copolymères de styrène et de butadiène préparés en émulsion présentant une température de transition vitreuse allant de -55°C à -30°C.

11. Composition de caoutchouc réticulable ou réticulée selon une quelconque des revendications 7 à 10, **caractérisée en ce qu'**elle comprend ledit ou lesdits élastomères diéniques majoritaires selon une quantité de 100 pce.

12. Composition de caoutchouc réticulable ou réticulée selon une quelconque des revendications 7 à 10, **caractérisée en ce qu'**elle comprend un coupage dudit ou desdits élastomères diéniques majoritaires avec ledit ou lesdits élastomères diéniques minoritaires.

13. Composition de caoutchouc réticulable ou réticulée selon les revendications 9 et 12, **caractérisée en ce qu'**elle comprend un coupage de l'un au moins desdits polybutadiènes présentant un taux d'enchaînements cis-1,4 supérieur à 90 % avec l'un au moins desdits copolymères de styrène et de butadiène préparés en solution.

14. Composition de caoutchouc réticulable ou réticulée selon les revendications 10 et 12, **caractérisée en ce qu'**elle comprend un coupage de l'un au moins desdits polybutadiènes présentant un taux d'enchaînements cis-1,4 supérieur à 90 % avec l'un au moins desdits copolymères de styrène et de butadiène préparés en émulsion.

15. Composition de caoutchouc réticulable ou réticulée selon une quelconque des revendications 1 à 14, **caractérisée en ce qu'**elle comprend du noir de carbone à titre de charge renforçante, selon une quantité allant de 60 pce à 200 pce.

16. Composition de caoutchouc réticulable ou réticulée selon la revendication 1, **caractérisée en ce qu'**elle comprend une charge blanche renforçante à titre de charge renforçante, selon une quantité égale ou supérieure à 70 pce.

17. Composition de caoutchouc réticulable ou réticulée selon la revendication 9, **caractérisée en ce qu'**elle comprend un coupage de noir de carbone et d'une charge blanche renforçante, à titre de charge renforçante.

18. Composition de caoutchouc réticulable ou réticulée selon une quelconque des revendications 1 à 17, **caractérisée en ce qu'**elle comprend, à titre de composé plastifiant non extrait du pétrole, au moins une résine plastifiante hydrocarbonée selon une quantité allant de 5 à 20 pce, cette résine étant miscible dans ledit ou lesdits élastomères diéniques et présentant une température de transition vitreuse comprise entre 10° C et 150° C et une masse moléculaire moyenne en nombre comprise entre 400 g/mol et 2000 g/mol.

19. Composition de caoutchouc réticulable ou réticulée selon la revendication 18, **caractérisée en ce que** ladite résine plastifiante présente une température de transition vitreuse allant de 30°C à 100°C, une masse moléculaire moyenne en nombre comprise entre 400 et 1000 g/mol, et un indice de polymolécularité inférieur à 2.

20. Bande de roulement d'enveloppe de pneumatique, **caractérisée en ce qu'**elle est constituée d'une composition de caoutchouc selon une quelconque des revendications 1 à 19.

21. Enveloppe de pneumatique, **caractérisée en ce qu'**elle comporte une bande de roulement selon la revendication 20.

## Claims

1. A cross-linkable or cross-linked rubber composition which is usable for constituting a tyre tread, said composition being based on at least:
- one or more diene elastomers, and
- a plasticiser including a vegetable oil comprising at least one glycerol oleic acid triester,
**characterised in that** said plasticiser comprises:
- in a mass fraction of from 45% to 100%, as said vegetable oil, a sunflower oil the oleic acid of which represents a mass fraction equal to or greater than 70% of the entire fatty acid, and
- in a mass fraction of from 55% to 0%, one or more plasticising oils extracted from petroleum, of paraffinic, aromatic or naphthenic type,
and **in that**:
- the amount of sunflower oil lies within a range from 10 to 40 phr, and
- the amount of optional plasticising oil extracted from petroleum lies within a range from 0 to 30 phr.

2. A cross-linkable or cross-linked rubber composition according to Claim 1, **characterised in that** the oleic acid represents a mass fraction equal to or greater than 85% of the entire fatty acid.

3. A cross-linkable or cross-linked rubber composition according to any one of the preceding claims, **characterised in that** said plasticiser comprises:
- said sunflower oil in a mass fraction of from 60% to 100%, and
- said oil(s) extracted from petroleum in a mass fraction of from 40% to 0%.

4. A cross-linkable or cross-linked rubber composition according to Claim 3, **characterised in that** said plasticiser comprises:
- said sunflower oil in a mass fraction of from 80% to 100%, and
- said oil(s) extracted from petroleum in a mass fraction of from 20% to 0%.

5. A cross-linkable or cross-linked rubber composition according to Claim 4, **characterised in that** said plasticiser comprises said compound(s) not extracted from petroleum in a mass fraction of 100%.

6. A cross-linkable or cross-linked rubber composition according to Claim 1, **characterised in that** it comprises:
- said compound(s) not extracted from petroleum, in a quantity of from 20 to 35 phr, and
- said oil(s) extracted from petroleum, in a quantity of from 0 to 20 phr.

7. A cross-linkable or cross-linked rubber composition according to any one of Claims 1 to 6, **characterised in that** it comprises, as diene elastomer(s):
- in a quantity greater than 50 phr and up to 100 phr, one or more diene elastomers, or majority elastomers, each having a glass transition temperature of between -65°C and - 10°C, and
- in a quantity less than 50 phr and down to 0 phr, one or more diene elastomers, or minority elastomers, each having a glass transition temperature of between -110°C and -80°C.

8. A cross-linkable or cross-linked rubber composition according to Claim 7, **characterised in that**:
- said majority diene elastomer(s) belong to the group consisting of styrene/butadiene copolymers prepared in solution, styrene/butadiene copolymers prepared in emulsion, natural polyisoprenes, synthetic polyisoprenes having a cis-1,4 linkage content greater than 95% and of a mixture of these elastomers, and
- said minority diene elastomer(s) comprise polybutadienes having a cis-1,4 linkage content greater than 90%.

9. A cross-linkable or cross-linked rubber composition according to Claim 8, **characterised in that** it comprises styrene/butadiene copolymers prepared in solution having a glass transition temperature of from -50°C to -15°C and a trans-1,4 butadiene linkage content which is greater than 50%.

10. A cross-linkable or cross-linked rubber composition according to Claim 8, **characterised in that** it comprises styrene/butadiene copolymers prepared in emulsion having a glass transition temperature of from -55°C to -30°C.

11. A cross-linkable or cross-linked rubber composition according to any one of Claims 7 to 10, **characterised in that** it comprises said majority diene elastomer(s) in a quantity of 100 phr.

12. A cross-linkable or cross-linked rubber composition according to any one of Claims 7 to 10, **characterised in that** it comprises a blend of said majority diene elastomer(s) with said minority diene elastomer(s).

13. A cross-linkable or cross-linked rubber composition according to Claims 9 and 12, **characterised in that** it comprises a blend of at least one of said polybutadienes having a cis-1,4 linkage content greater than 90% with at least one of said styrene/butadiene copolymers prepared in solution.

14. A cross-linkable or cross-linked rubber composition according to Claims 10 and 12, **characterised in that** it comprises a blend of at least one of said polybutadienes having a cis-1,4 linkage content greater than 90% with at least one of said styrene/butadiene copolymers prepared in emulsion.

15. A cross-linkable or cross-linked rubber composition according to any one of Claims 1 to 14, **characterised in that** it comprises carbon black as reinforcing filler, in a quantity of from 60 to 200 phr.

16. A cross-linkable or cross-linked rubber composition according to Claim 1, **characterised in that** it comprises a reinforcing white filler as reinforcing filler, in a quantity equal to or greater than 70 phr.

17. A cross-linkable or cross-linked rubber composition according to Claim 9, **characterised in that** it comprises a blend of carbon black and a reinforcing white filler as reinforcing filler.

18. A cross-linkable or cross-linked rubber composition according to any one of Claims 1 to 17, **characterised in that** it comprises, as plasticising compound not extracted from petroleum, at least one hydrocarbon plasticising resin in a quantity of from 5 to 20 phr, this resin being miscible in said diene elastomer(s) and having a glass transition temperature of between 10°C and 150°C and a number-average molecular weight of between 400 g/mol and 2000 g/mol.

19. A cross-linkable or cross-linked rubber composition according to Claim 18, **characterised in that** said plasticising resin has a glass transition temperature of from 30°C to 100°C, a number-average molecular weight of between 400 and 1000 g/mol, and a polymolecularity index less than 2.

20. A tread for a tyre, **characterised in that** it consists of a rubber composition according to any one of Claims 1 to 19.

21. A tyre, **characterised in that** it comprises a tread according to Claim 20.

## Patentansprüche

1. Vernetzbare oder vernetzte Kautschukmischung, die verwendet werden kann, um einen Laufstreifen eines Luftreifens zu bilden, wobei die Zusammensetzung zumindest basiert auf:
o einem oder mehreren Dienelastomeren, und
o einem Weichmacher, der ein pflanzliches Öl enthält, das mindestens einen Glyceroltriester von Ölsäure enthält,
**dadurch gekennzeichnet, dass** der Weichmacher enthält:
o in einem Masseanteil von 45 bis 100 % als pflanzliches Öl ein Sonnenblumenöl, bei dem die Ölsäure einen Masseanteil von mindestens 70 % der Fettsäuregesamtmenge ausmacht, und
o in einem Masseanteil von 55 bis 0 % ein oder mehrere aus Erdöl gewonnene Weichmacheröle vom Paraffintyp, aromatischen Typ oder Naphthentyp,
und **dadurch**, dass:
o der Gehalt des Sonnenblumenöls im Bereich von 10 bis 40 pce liegt und
o der Gehalt des aus Erdöl gewonnen optionalen Weichmacheröls im Bereich von 0 bis 30 pce liegt.

2. Vernetzbare oder vernetzte Kautschukmischung nach Anspruch 1, **dadurch gekennzeichnet, dass** die Ölsäure einen Masseanteil von mindestens 85 % der Fettsäuregesamtmenge ausmacht.

3. Vernetzte oder vernetzbare Kautschukmischung nach einem der vorhergehenden Ansprüche, **dadurch gekennzeichnet, dass** der Weichmacher enthält:
o das Sonnenblumenöl mit einem Masseanteil von 60 bis 100 % und
o das oder die aus Erdöl gewonnenen Öle in einem Masseanteil von 40 bis 0 %.

4. Vernetzte oder vernetzbare Kautschukmischung nach Anspruch 3, **dadurch gekennzeichnet, dass** der Weichmacher enthält
o das Sonnenblumenöl in einem Masseanteil von 80 bis 100 % und
o das oder die aus Erdöl gewonnenen Öle in einem Masseanteil von 20 bis 0 %.

5. Vernetzbare oder vernetzte Kautschukmischung nach Anspruch 4, **dadurch gekennzeichnet, dass** der Weichmacher die nicht aus Erdöl gewonnene(n) Verbindung(en) in einem Masseanteil von 100 % enthält.

6. Vernetzbare oder vernetzte Kautschukmischung nach Anspruch 1, **dadurch gekennzeichnet, dass** sie enthält
o die nicht aus Erdöl gewonnene(n) Verbindung(en) in einem Masseanteil von 20 bis 35 pce und
o das oder die aus Erdöl gewonnene(n) Öl(e) in einem Masseanteil von 0 bis 20 pce.

7. Vernetzbare oder vernetzte Kautschukmischung nach einem der Ansprüche 1 bis 6, **dadurch gekennzeichnet, dass** sie als Dienelastomer(e) enthält:
o in einer Menge über 50 pce und bis zu 100 pce ein oder mehrere Dienelastomere, oder in einem überwiegenden Anteil enthaltene Elastomere, von denen jedes eine Glasübergangstemperatur von -65 bis -10 °C aufweist, und
o in einem Anteil unter 50 pce und bis zu 0 pce ein oder mehrere Dienelastomere, oder in einem geringeren Anteil enthaltene Elastomere, von denen jedes eine Glasübergangstemperatur von -110 bis -80 °C aufweist.

8. Vernetzbare oder vernetzte Kautschukmischung nach Anspruch 7, **dadurch gekennzeichnet, dass**
o das oder die in einem überwiegenden Anteil enthaltenen Dienelastomere aus der Gruppe stammen, die aus Copolymeren von Styrol und Butadien, die in Lösung hergestellt werden, Copolymeren von Styrol und Butadien, die in Emulsion hergestellt werden, natürlichen Polyisoprenen, synthetischen Polyisoprenen, die einen Gehalt an cis-1,4-Verknüpfungen über 95 % aufweisen, und einem Gemisch dieser Elastomere besteht, und
o das oder die in einem kleineren Anteil enthaltenen Dienelastomere Polybutadiene umfassen, die einen Gehalt an cis-1,4-Verknüpfungen über 90 % aufweisen.

9. Vernetzbare oder vernetzte Kautschukmischung nach Anspruch 8, **dadurch gekennzeichnet, dass** sie Copolymere von Styrol und Butadien enthält, die in Lösung hergestellt sind und eine Glasübergangstemperatur von -50 °C bis -15 °C und einen Gehalt an trans-1,4-Butadienverknüpfungen über 50 % aufweisen.

10. Vernetzbare oder vernetzte Kautschukmischung nach Anspruch 8, **dadurch gekennzeichnet, dass** sie Copolymere von Styrol und Butadien enthält, die in Emulsion hergestellt sind und eine Glasübergangstemperatur von -55 bis -30 °C aufweisen.

11. Vernetzbare oder vernetzte Kautschukmischung nach einem der Ansprüche 7 bis 10, **dadurch gekennzeichnet, dass** sie das oder die in einem überwiegenden Anteil enthaltenen Dienelastomere in einer Menge von 100 pce enthält.

12. Vernetzbare oder vernetzte Kautschukmischung nach einem der Ansprüche 7 bis 10, **dadurch gekennzeichnet, dass** sie einen Verschnitt aus dem oder den in einem überwiegenden Anteil enthaltenen Dienelastomeren und dem oder den in einem kleineren Anteil enthaltenen Dienelastomeren enthält.

13. Vernetzbare oder vernetzte Kautschukmischung nach einem der Ansprüche 9 bis 12, **dadurch gekennzeichnet, dass** sie einen Verschnitt aus mindestens einem der Polybutadiene mit einem Gehalt an cis-1,4-Verknüpfungen über 90 % und mindestens einem der Copolymere von Styrol und Butadien, die in Lösung hergestellt werden, enthält.

14. Vernetzbare oder vernetzte Kautschukmischung nach einem der Ansprüche 10 bis 12, **dadurch gekennzeichnet, dass** sie einen Verschnitt aus mindestens einem der Polybutadiene mit einem Gehalt an cis-1,4-Verknüpfungen über 90 % und mindestens einem der Copolymere von Styrol und Butadien, die in Emulsion hergestellt werden, enthält.

15. Vernetzbare oder vernetzte Kautschukmischung nach einem der Ansprüche 1 bis 14, **dadurch gekennzeichnet, dass** sie Ruß als verstärkenden Füllstoff in einer Menge von 60 bis 200 pce enthält.

16. Vernetzbare oder vernetzte Kautschukmischung nach Anspruch 1, **dadurch gekennzeichnet, dass** sie einen hellen verstärkenden Füllstoff als verstärkenden Füllstoff in einer Menge von 70 pce oder darüber enthält.

17. Vernetzbare oder vernetzte Kautschukmischung nach Anspruch 9, **dadurch gekennzeichnet, dass** sie als verstärkenden Füllstoff einen Verschnitt von Ruß und einem hellen verstärkenden Füllstoff enthält.

18. Vernetzbare oder vernetzte Kautschukmischung nach einem der Ansprüche 1 bis 17, **dadurch gekennzeichnet, dass** sie als nicht aus Erdöl gewonnenen Weichmacher mindestens ein Weichmacherharz auf Kohlenwasserstoffbasis in einer Menge von 5 bis 20 pce enthält, wobei das Harz in dem oder den Dienelastomeren mischbar ist und eine Glasübergangstemperatur von 10 bis 150 °C und eine zahlenmittlere Molmasse von 400 bis 2.000 g/mol aufweist.

19. Vernetzbare oder vernetzte Kautschukmischung nach Anspruch 18, **dadurch gekennzeichnet, dass** das Weichmacherharz eine Glasübergangstemperatur von 30 bis 100 °C aufweist, eine zahlenmittlere Molmasse von 400 bis 1.000 g/mol besitzt und einen Polydispersitätsindex unter 2 aufweist.

20. Laufstreifen für einen Luftreifen, **dadurch gekennzeichnet, dass** er aus einer Kautschukmischung nach einem der Ansprüche 1 bis 19 besteht.

21. Luftreifen, **dadurch gekennzeichnet, dass** er einen Laufstreifen nach Anspruch 20 aufweist.
